# EUROPEAN PATENT SPECIFICATION

(11) **EP 1 236 236 B1**
(45) Date of publication and mention of the grant of the patent: **17.03.2010**
(21) Application number: 00967438.3
(22) Date of filing: 28.09.2000
(51) Int. Cl.: H01M 8/02, H01M 8/12, H01M 8/24

(54) **FUEL CELL ASSEMBLY**
BRENNSTOFFZELLENANORDNUNG
ENSEMBLE PILE ELECTROCHIMIQUE

(30) Priority: 29.09.1999 AU PQ315499
(43) Date of publication of application: 04.09.2002
(73) Proprietor: Ceramic Fuel Cells Limited, Noble Park, VIC 3174 (AU)
(72) Inventor: JAFFREY, Donald, Mount Dandenong, Victoria 3767 (AU); FOGER, Karl, Kew, Victoria 3101 (AU)
(74) Representative: Jones, Helen M.M.
(86) International application number: PCT/AU2000/001187
(87) International publication number: WO 2001/024300

(56) References cited:
- EP-A1- 0 055 016
- EP-A1- 0 442 742
- US-A- 3 522 097
- US-A- 5 085 742
- US-A- 5 827 620
- PATENT ABSTRACTS OF JAPAN vol. 1996, no. 01, 31 January 1996 (1996-01-31) & JP 07 235316 A (FUJIKURA LTD), 5 September 1995 (1995-09-05)

## Description

### TECHNICAL FIELD

The present invention relates to fuel cells and is particularly concerned with a tubular solid oxide fuel cell assembly.

### BACKGROUND ART

Fuel cells convert gaseous fuels (such as hydrogen, natural gas, and gasified coal) directly into electricity via an electrochemical process. A fuel cell continuously produces power when supplied with fuel and oxidant, normally air or other oxygen-containing gas. A typical fuel cell consists of an electrolyte (ionic conductor, H⁺,O²⁻, CO₃²⁻, etc.) in contact with two electrodes (mainly electronic conductors). On shorting the cell through an external load, fuel oxidises at the anode resulting in the release of electrons which flow through the external load and reduce oxygen at the cathode. The charge flow in the external circuit is balanced by ionic current flows within the electrolyte. At the cathode oxygen from the air or other oxidant is disassociated and converted to oxygen ions which migrate through the electrolyte membrane and react with the fuel at the anode/electrolyte interface. The voltage from a single cell under typical load conditions is in the vicinity of 0.6 to 1.0V DC and current densities in the range of 100 to 1000 mAcm⁻² can be achieved.

Several different types of fuel cells are under development. Amongst these, the solid oxide fuel cell (SOFC) is regarded as potentially the most efficient and versatile power generation system, in particular for dispersed power generation, with low pollution, high efficiency, high power density and fuel flexibility.

Numerous SOFC configurations are under development, including the planar, the tubular, the segmented and the monolithic designs. The planar or flat plate design has been widely investigated. In this concept, the components - electrolyte/electrode laminates and interconnect or gas separator plates, which may have gas channels formed therein - are fabricated individually and then stacked together and sealed with a high temperature sealing material to form either a fixed or sliding seal.

SOFCs operate in the vicinity of 700 - 1000°C, and planar SOFCs are inherently difficult to seal, especially as a consequence of thermal shock and cycling. Furthermore, because of the way planar SOFCs are stacked with interconnects or gas separators therebetween, the interconnects add mass and complexity of materials to the planar SOFC design.

Many of the disadvantages of planar SOFCs are alleviated in tubular SOFCs. In the tubular concept, one of the oxygen-containing gas and fuel gas is passed along the interior of the tube, while the other gas is passed over the exterior.

In designs proposed by Westinghouse, the oxygen-containing gas is suppled to the interior of the tubular fuel cell, so the cathode is on the inside, whereas in designs proposed by Mitsubishi the fuel gas is supplied to the interior of the tubular fuel cell, so the anode is on the inside. In both proposals, the fuel cell assemblies including the fuel cell and the current collectors on both the anode and cathode sides are formed of ceramic or cermet materials leading to a structure which is susceptible to the fragility of these inherently brittle materials. Additionally, these tubular current collectors have an inherently long electron flow path compared to those of other designs and, since the electronic conductivities of the anode and cathode materials are relatively low, resistive losses tend to be high. This feature has tended to limit the power densities of tubular fuel cells and/or has required relatively large structures to achieve the desired currents.

Furthermore, because of the relatively poor thermal conductivity of ceramic materials, thermal or power variations within a tubular fuel cell formed primarily of ceramic materials, or within a bundle of such tubes, can cause relatively high localised temperature gradients which in turn introduce high localised strains into the tube(s). These can lead to the fracture of the tube(s).

In International Patent Application WO 99/17390 there is proposed an SOFC tubular fuel cell assembly in which the anode is on the inside and the cathode is on the outside of the tube. On the cathode it is proposed that an electrically conducting layer formed of silver wire or silver paste be provided. The electrons produced at the anode are passed to a current collector made of nickel and consisting of a number of wires twisted around each other.

The present invention especially concerns a tubular fuel cell assembly comprising an anode side defining a tubular passage for fuel gas, the anode side comprising a ceramic-type anode layer formed by sintering green material and an anode-side current collector in electrical contact with the anode layer, a solid oxide electrolyte layer on a radially outer surface of the anode layer, a cathode layer on a radially outer surface of the electrolyte layer, and a cathode-side current collector on the cathode layer.

JP 07235316 describes a tubular fuel cell assembly in which the anode side defines a tubular passage for fuel gas, in which the porous anode tube is formed of a cermet of mixed metallic nickel having good conductivity and stabilised zirconia. The anode tube is formed by spraying with the proportions of the material so controlled that there is more stabilised zirconia at the outer circumference and more metallic nickel at the inner circumference with the proportions gradually changing through the thickness of the anode tube so that an integral porous current collector part of nickel only is formed at the innermost circumference, which serves as both a current collector and a support.

US 5,827,620 describes an extruded electrolyte tube supporting an inner electrode in the form of a nickel/zirconia cermet ink defining an anode. A strontium doped lanthanum manganite layer is formed on the outside of the tube to define a cathode. Electrical contact is made with the anode by winding a spiral wire inside the tube.

### SUMMARY OF THE INVENTION

According to the present invention there is provided a tubular fuel cell assembly of the type defined wherein the anode-side current collector comprising comprises a preformed tubular metallic structure which is adapted to permit fuel gas in the passage to contact the anode layer and, at least the surface of the tubular metallic structure being formed of Ni or Ni alloy, characterised and in that the anode layer is formed on the tubular metallic structure such that the tubular metallic structure is at least partly embedded in the anode layer and reinforces the anode layer.

By the present invention, the current collection on the anode side of the fuel cell is substantially improved over nickel cermet current collectors, with an electrical conductivity about 500 times greater at the operating temperature of an SOFC, about 700 to 1000°C, and a greatly improved thermal conductivity. This permits substantially smaller devices to be adopted and losses to be reduced. Additionally, by preforming the tubular metallic structure and at least partly embedding the tubular metallic structure of the anode side current collector in the anode layer when the anode layer is formed, the tubular metallic structure provides a degree of reinforcement to the SOFC, also permitting smaller devices to be adopted while at the same time improving thermal and mechanical shock resistance. This may allow the fuel cells to be employed in smaller and possibly even mobile applications.

The overall diameter of the tubular fuel cell assembly may be in the range 2 to 20mm or larger, preferably 3 to 10mm. Each tubular fuel cell assembly may have any desired length, for example in the range of about 90 to 1000mm, preferably 200 to 300mm. A plurality of the tubular fuel cell assemblies may be disposed side by side or bundled together and electrically connected in parallel or in series. The tubular fuel cell assemblies should be spaced from each other to permit oxygen-containing gas, preferably air, to flow over the cathode layers.

The anode layer is preferably a nickel cermet, for example Ni/Zr0₂, but other ceramic-type materials may be contemplated. The anode layer is preferably relatively thin with a thickness in the range of about 50 to 500 µm, for example about 200 µm. The anode layer is a porous layer which is formed by disposing the material of the anode layer in a green condition, for example the nickel cermet in particulate form mixed with a binder, on to the previously-formed tubular metallic structure. During this process the tubular metallic structure will become at least partly embedded in the green material, optionally with the application of pressure to the green material and/or to the tubular metallic structure if this has a degree of stretch. The green material is then dried by sintering. The green material may be disposed on the tubular metallic structure by, for example, casting, drawing or extruding. Preferably the anode layer is extruded. The extrusion may be performed hot, warm or cold. Sintering of the cermet material may be assisted by microwave heating.

In one embodiment, the tubular metallic structure may be at least substantially completely embedded in the anode layer, for example just having its radially inner surface exposed in the passage of the fuel cell assembly, but this is not essential to providing the degree of reinforcement to the assembly. The reinforcement may be adequately provided by a simple physical interengagement or interlocking between the anode layer and tubular metallic structure. Such interengagement could be provided by the tubular metallic structure having surface formations thereon which project radially outwardly into the anode layer, or, for example, by the tubular metallic structure having concave formations on a radially outer surface thereof into which the anode layer extends, and the term "at least partly embedded" shall be construed accordingly.

The tubular metallic structure of the anode side current collector may take any of a variety of forms, or a combination of two or more of these forms, and may have a thickness in the range of about 20 to 200µm or greater depending upon the configuration and, for example, the desired current density. Preferably, the tubular metallic structure extends the full length of the tubular passage.

In one embodiment, the tubular metallic structure may comprise a spiral or mesh of nickel or nickel alloy thread.

Alternatively or in addition, the tubular metallic structure may comprise a support tube which is at least substantially rigid and is formed of or coated with nickel or nickel alloy. The support tube must permit free flow of fuel gas to the anode layer and thus it may comprise an expanded or woven mesh or otherwise perforated tube of nickel or nickel alloy. Instead, the support tube may be formed of a porous nickel material. Alternatively, the support tube may comprise a nickel or nickel alloy surface layer on a substrate of, for example, a heat resistant metal acting as the primary heat conductor for each tubular fuel cell assembly. The substrate may be an expanded or woven mesh or otherwise perforated tube with perforated nickel or nickel alloy foil wrapped over the sheet, or with nickel or nickel alloy deposited or otherwise coated onto it. Several construction variations are possible, for example Ni mesh on steel mesh, Ni plated mesh on Ni plated steel mesh, centrifugally cast Ni spiral on Ni plated steel mesh or perforated Ni sheet wrapping on plain steel mesh, with the steel optionally being replaced by another thermally conductive material with adequate high temperature properties. As noted above, the nickel or nickel alloy layer may have a thickness in the range of about 20 to 200µm. The substrate may have a thickness in the range of about 0.05 to 0.5 mm.

An advantage of combining the aforementioned spiral or mesh thread current collector with the support tube is that the support tube may provide optimum electrical and thermal conductivity as well as mechanical shock resistance, while the thread current collector may be much finer in scale and provide more effective electron collection. The thread may be wound or otherwise provided on the support tube.

As an alternative to, or in addition to, an at least substantially rigid support tube which acts as a heat conductor as well as an electrical conductor, a separate tube liner may be used within the passage of the fuel cell assembly to act as a superior thermal conductor, for example of copper. The tube liner may itself be tubular or have any other suitable cross-section. A copper tube liner may have those surfaces exposed to the nickel on the anode side of the fuel cell protected with, for example, alumina to prevent poisoning of the nickel when the nickel is to be used as a catalyst for steam reforming of methane fuel gas supplied to the passage.

To allow for the differential expansion of the tube liner during thermal cycling of the tubular fuel cell assembly, and for ease of assembly, the tube liner may be a loose fit in the passage of the tubular fuel cell assembly at least at room temperature and expand into contact with the anode-side current collector at the operating temperature of the fuel cell assembly.

Commercially pure nickel is preferred for the anode-side current collector, or at least the surface thereof. This is available as, for example, alloy types 200 and 201 from Inco Alloys International. The nickel alloy which may be provided at at least the surface of the tubular metallic structure should contain Ni as the major component, preferably at a level greater than 50% by weight, and the other alloying element or elements should not be detrimental to the performance of the tubular fuel cell assembly. Copper-free nickel alloys are preferred in order to provide CH₄ reforming capability at the anode side of the fuel cell assembly. Chromium-free alloys are also preferred to avoid Cr contamination of the cathode side and consequent total failure of the or each fuel cell assembly in the event of leakage of Cr from the anode side. Other properties required of a suitable nickel alloy include high electrical conductivity, low creep at the operating temperatures, no reaction with the fuel gases (except to catalyse CH₄ reforming if desired), and low levels of "dusting" disintegration.

The solid oxide electrolyte layer is preferably a Y₂O₃ doped ZrO₂, for example 8YSZ. Preferably the solid oxide electrolyte layer is relatively thin with a thickness less than 70 µm, for example about 20µm or less. The electrolyte is preferably continuous along the full length and around the circumference of the tubular anode layer and may be formed in any of a variety of ways bearing in mind that the electrolyte layer must be a dense, defect-free layer to prevent mixing of the fuel gas and oxygen-containing gas through the fuel cell. The electrolyte material may be deposited onto the tube by, for example, slurry coating. Other possible methods include extrusion onto the anode layer or co-extrusion with it, sol gel spin casting and electrophoretic coating.

A variety of different materials are known for use as the cathode layer of a solid oxide fuel cell, but the currently preferred materials are perovskites such as strontium doped lanthanum manganite (LSM) and/or strontium doped praeseodymium manganite (PSM) or La cobaltites, preferably having a total thickness in the range of about 30 to 100 µm. The cathode layer may be applied by, for example, slurry spraying or any other form of slurry coating, screen printing or extrusion.

In a preferred embodiment, the cathode layer is discontinuous along the tubular fuel cell assembly to provide a plurality of longitudinally spaced cathode portions. This effectively provides a plurality of adjacent fuel cells in the tubular fuel cell assembly, albeit with a common anode layer and a common solid oxide electrolyte layer.

In one embodiment of a tubular fuel cell assembly including a plurality of cathode portions, the adjacent individual portions of the cathode layer are separated longitudinally by a gap in the range of about 2 to 10 mm about every 25 to 80 mm, most preferably about every 40 to 50 mm. Likewise, the cathode layer may have one or more similar gaps extending axially along the tube, preferably with two diagonally opposed gaps. The individual portions of the divided cathode layer may be electrically connected with adjacent portions along and/or around the tube, and/or with adjacent tubular fuel cell assemblies in a fuel cell bundle. This helps to maintain the performance of the tubular fuel cell assembly should the cathode side of the assembly be damaged.

Preferably, the cathode layer is applied by, for example, extrusion slurry coating or screen printing. Any gap or gaps defining the cathode layer portions may be formed in the cathode layer as the cathode layer is applied, by any suitable technique which may be readily identified by one skilled in the art according to the technique by which the layer is applied. The cathode layer preferably has a thickness in the range of about 30 to 100µm. Currently preferred materials are perovskites such as strontium doped lanthanum manganite (LSM) and/or strontium doped praeseodymium manganite (PSM) or La cobaltites.

The cathode side current collector must be adapted to permit oxygen-containing gas around the fuel cell to contact the cathode layer, and preferably comprises a metallic material having a relatively high electrical conductivity. Such a metallic current collector may comprise a mesh which is advantageously screen printed or otherwise deposited on the cathode layer, or a respective mesh preferably applied by any of these methods on each portion of the preferred divided cathode layer. Such a mesh may have a thickness in the range of about 20 to 100µm. Especially, but not only, where the cathode layer is divided longitudinally to form plural fuel cells along the tube, one or more electrically conductive metallic strips, which form part of the cathode-side current collector and may be of the same material as the mesh if same is provided, may extend the length of the tubular fuel cell assembly, or part of it, and be screen printed or otherwise deposited on the cathode layer. If a metallic strip bridges two or more of the plural fuel cells it may electrically connect them in series. Alternatively, or in addition, the individual fuel cells may be connected by other means, such as electrically conductive blocks, in series or in parallel, that is with adjacent fuel cell assemblies. The aforementioned meshes or other current collector may be deposited over the metallic strip or strips or at least one of the metallic strips, or be otherwise electrically connected thereto. The or each metallic strip could be disposed on the electrolyte layer in a respective longitudinal gap in the cathode layer, but in electrical contact with the cathode side current collector, in which case it may have a width less than the longitudinal gap. The or each metallic strip may have a thickness in the range of about 100 to 200µm, preferably about 100 µm.

Preferably, the metallic material of the cathode side current collector is silver, but other noble metals, such as platinum, or their alloys would be suitable. Current collection on the cathode side of the fuel cell using a noble metal is substantially improved over the known ceramic-based current collectors, with an electrical conductivity of about 4 x 10⁵ S/cm for silver being >10,000 times higher at the operating temperature of an SOFC. This permits substantially smaller structures to be adopted. Additionally, the noble metal or alloy current collector may provide a degree of reinforcement to the SOFC, also permitting smaller structures to be adopted while at the same time improving shock resistance.

The shock resistance of a tubular fuel cell assembly in accordance with the present invention may be greatly enhanced by providing a fuel cell bundle comprising a plurality of the tubular fuel cell assemblies each mechanically connected to one or more adjacent tubular fuel cell assemblies, for example in a honeycomb structure.

The mechanical connection between the tubular fuel cell assemblies may be continuous along at least part of the length of the fuel cell assemblies or intermittent. The mechanical connection may be flexible or rigid, and it may be achieved by, for example, soldering or welding. Conveniently, the mechanical connection may also provide an electrical connection between the adjacent tubular fuel cell assemblies. Advantageously this maybe done using the same material for the mechanical connection as the material of the cathode side current collector.

### BRIEF DESCRIPTION OF THE DRAWINGS

One embodiment of a tubular fuel cell assembly in accordance with the present invention will now be described by way of example only with reference to the accompanying drawings in which:
Figure 1 is a cross-section through one embodiment of a single tubular fuel cell assembly;
Figure 2 is a perspective view of a bundle of 18 of the tubular fuel cell assemblies of Figure 1, each fuel cell assembly having plural fuel cells, the fuel cells in some of the assemblies being connected in series, but in others not, as shown in Figure 3;
Figures 3a and 3b together are a plan view of the bundle of Figure 2, partially cut away and not to scale, showing in Figure 3a the series connection of the aligned cells in each assembly and in Figure 3b the lack of series connection; and
Figures 4a and 4b together are a schematic end view of a bundle of 18 of the tubular fuel cell assemblies of Figure 1 showing two alternative means for linking adjacent fuel cell assemblies in parallel.

### DETAILED DESCRIPTION OF THE PREFERRED EMBODIMENTS

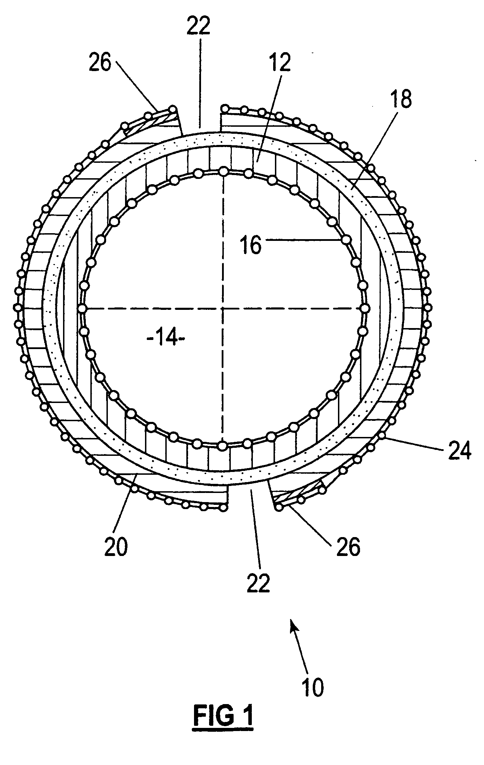

Referring to Figure 1 of the drawings there is shown in cross-section (not to scale) a tubular fuel cell assembly 10 comprising a porous Ni ZrO₂ cermet anode layer 12 defining a tubular passage 14 for fuel gas at the inner surface of the fuel cell assembly. A mesh 16 of nickel strands is partly embedded in and, therefore, in electrical contact with the anode layer 12. The partial embedment of the mesh 16 (not clearly illustrated in Figure 1) is such that the mesh is fast with the anode layer so that the mesh reinforces the cermet material of the anode layer. The mesh has a thickness of about 50µm and the spacing between strands is 1-2mm. The nickel mesh 16 is connected to electrical connectors (not shown) and acts as a current collector on the anode side. The nickel mesh 16 is preformed and the material of the porous anode layer 12 may be extruded onto it from a die and then sintered.

The porous anode layer 12 may have a thickness of about 200 µm, and a dense 8YSZ solid oxide electrolyte layer 18 having a thickness of about 20 µm is disposed continuously over the anode layer 12. The material of the electrolyte layer 18 may be co-extruded green with the material of the anode layer and cured, extruded green on to the anode layer and cured, or, for example, first formed by casting and rolling into a green tape which is spirally wound onto the tubular anode layer and then cured. Curing must result in a fully dense layer such that the fuel gas and oxygen-containing gas can not pass through the electrolyte layer.

A porous cathode layer 20, for example of or incorporating LSM, having a thickness of about 50 µm is disposed on the electrolyte layer 18 by slurry coating followed by curing.

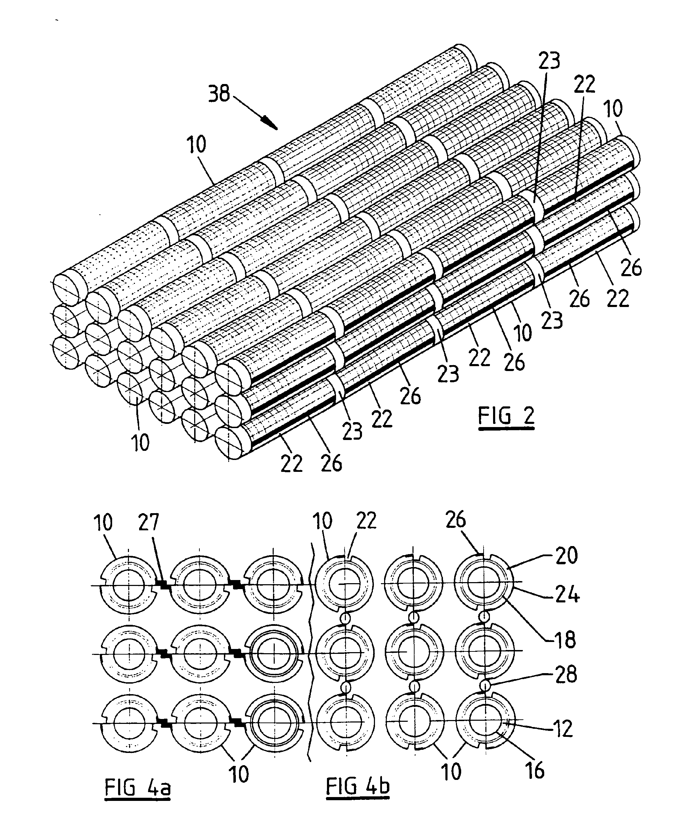

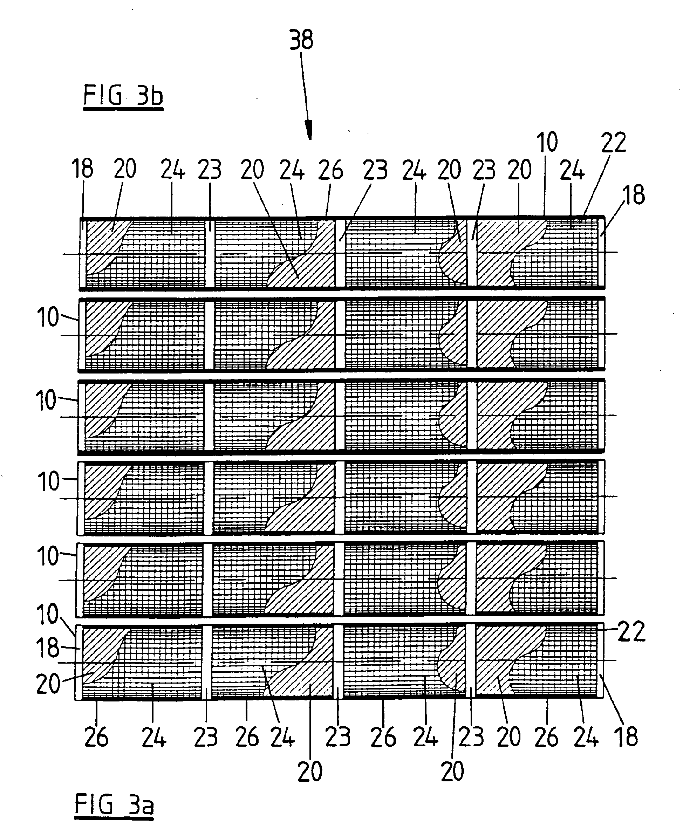

The cathode layer 20 is discontinuous around the circumference of the tubular fuel cell assembly 10, with two diagonally opposed longitudinal gaps 22 defining the discontinuity. In addition, although not shown in Figures 1 and 4, the cathode layer 20 is divided longitudinally by circumferential gaps 23 such as shown in Figures 2 and 3. As with the gaps 22, the circumferential gaps 23 extend through to the electrolyte layer 18 to effectively provide a series of individual fuel cells with common electrolyte and anode layers 18 and 12 as well as a common anode side current collector 16. The overall diameter of the tubular fuel cell assembly 10 may be 10 mm and the gaps 22 and 23 between adjacent portions of the cathode layer 20 may be about 4 mm in width, but smaller and larger versions are possible.

A respective mesh 24 of silver is disposed over each portion of the cathode layer 20, each of which may be screen printed onto the cathode layer portion. The silver meshes 24 disposed over each circumferentially spaced longitudinal array of cathode layer portions may be electrically connected to each other by a respective longitudinal strip 26 of silver which may be screen printed onto the cathode layer 20 adjacent a respective one of the longitudinal gaps 22 between the cathode layer portions. Each strip 26 has a width of about 3 mm and a thickness of about 100µm. Thus, in this embodiment, the circumferentially adjacent silver meshes 24 are not connected directly, but the longitudinally adjacent silver meshes 24 are connected by the silver strips 26. Alternatively, a respective silver strip 26 is provided for each cathode layer portion. The silver strips may be regularly connected to electrical connectors (not shown) to allow for current collection when fuel gas such as moist hydrogen is passed through the tubular passage 14 and oxygen-containing gas such as air is passed over the cathode layer 20 at the SOFC operating temperature of 700 to 1000°C.

Figures 2 and 3 show a bundle 38 of 18 tubular fuel cell assemblies 10 in six columns of three. Each assembly 10 in Figure 3a has two longitudinal series of silver strips 26 with each silver strip 26 associated with a respective cathode layer portion and fuel cell. Such an arrangement is also shown in Figure 2, although, for convenience only, the silver strips 26 have only been shown in the foremost column of three assemblies 10.

As shown clearly in the alternative embodiment of Figure 3b, the four fuel cells separated by three circumferential gaps 23 in the cathode layer 20 and the silver mesh 24 in each fuel cell assembly 10 are connected in series by the diagonally opposed longitudinally extending silver strips 26 disposed, in this case, over the mesh 24.

Two or more of the assemblies 10 in Figures 2 and 3 may be mechanically supported and/or electrically connected at one or both ends and/or between the ends, for example as described with reference to Figure 4, but are shown physically spaced from each other and without support or connections for clarity.

Referring now to Figure 4, two optional methods of mechanically and electrically connecting adjacent assemblies 10 in bundles each comprising three rows of three assemblies are shown in Figures 4a and b, respectively. In Figure 4a, the assemblies 10 in each row are shown connected in parallel, while in Figure 4b the assemblies 10 in each column are shown connected in parallel. In both arrangements, the connectors are formed of silver welded to the interrupted silver strips 26 of Figure 3a, but in Figure 4a they are illustrated as intermittent solid blocks 27 to provide a mechanically rigid link while in Figure 4b they are illustrated as intermittent hollow and flexible connectors 28 to better tolerate variations in shape and size of the assemblies 10. It will be appreciated that either type of connector 27 and 28 may be used to connect the rows and/or columns of tubular fuel cell assemblies and that the assemblies 10 may also be connected at one or both ends.

The solid blocks 27 or hollow connectors 28 may additionally or only connect adjacent fuel cells in each fuel cell assembly 10 in Figure 3a in series, but in Figure 4 each cell in each tubular assembly 10 is connected not to the adjacent cell on the same assembly 10, but to the nearest neighbour in the next column or row of tubular assemblies 10, ie. only in parallel.

### Examples

The following examples illustrate, without limiting the invention, different processes for extruding an anode layer cermet comprising NiO/10 mol% yttria-zirconia (10YSZ) on to the outside surface of an expanded Ni-mesh current collector tube such that the current collector tube is partly embedded in the extruded anode layer in order to reinforce the dried, porous anode layer. The examples also illustrate the formation of a 10YSZ electrolyte layer on the anode layer, but do not illustrate the formation of a porous cathode layer on the electrolyte layer or of a cathode-side current collector on the cathode layer. The formation of the cathode layer and cathode-side current collector may be substantially as already described.

### Example 1:

This example uses an organic solvent based system for extrusion of NiO/10YSZ onto a Ni mesh tube and subsequent application of a 10YSZ electrolyte layer to the outside by coating.

A tube formed from expanded Ni mesh (5mm diameter) was pre-oxidised by heat-treatment in air at 400°C for 1 hour. An extrusion mixture was made by combining NiO and 10YSZ powders with binder, plasticiser and solvent. The NiO had a nominal particle size of 1µm with a range of 0.6 - 10µm. The 10YSZ had a nominal size of 1µm with a size range of 0.6 - 4.0µm. The ratio of NiO to 10YSZ powders was chosen to achieve a 50vol% Ni-10YSZ cermet. The powders were milled together with the binder and plasticiser in a high-shear mixer to produce a paste having a dough-like consistency.

The paste consisted of (by weight) 81 % NiO/10YSZ powder, 11 % polyvinyl butiral (PVB) binder and 8% benzyl butyl phtalate (BBP) plasticiser which was mixed with solvent at a solids to solvent ratio of about 9:1 by weight. The solvent was one third by weight methyl ethyl ketone and two thirds toluene. The formulation may be varied as required in the range 77-84 weight % powder, 8-14 weight % PVB and 6-9 weight % BBP and the amount of solvent adjusted to achieve the required dough-like consistency for extrusion.

The Ni-tube was passed through the centre of an extrusion die and a 300 micron thick layer of the paste was extruded onto the Ni tube. After drying, the extruded structure with the Ni tube partly embedded in the cermet layer was sintered at 1400°C. A 15 micron thick 10YSZ electrolyte layer was then deposited by slurry coating onto the 2-layer structure and sintered at 1400°C.

The 10YSZ slip used for the slurry coating was prepared in the same manner as the NiO/10YSZ paste, using the same proportions of PVB binder and BBP plasticiser to the weight of powder. However in order to produce a lower viscosity in the slip, compared to the paste, the solids to solvent ratio was reduced to about 7:3, the exact proportion being adjusted to achieve the required rheology characteristics.

### Example 2:

This example used a water based system for extrusion of NiO/10YSZ onto a Ni mesh tube and subsequent application of a 10YSZ electrolyte layer to the outside by coating.

A tube formed from expanded Ni mesh (5mm diameter) was pre-oxidised as for Example 1 above. An extrusion mixture was made by combining the NiO and 10YSZ powders described in Example 1 with binder, plasticiser and water. The ratio of NiO to 10YSZ powders was chosen to achieve a 50vol% Ni-10YSZ cermet. The powders were milled together with the binder and plasticiser in a high-shear mixer to produce a paste having a dough-like consistency.

The paste consisted of (by weight) 87% NiO/10YSZ powder, 9% polyvinyl alcohol (PVA) binder and 4% glycerol plasticiser which was mixed with water at a solids to water ratio of about 9:1 by weight. The formulation may be varied as required in the range 83-90 weight % powder, 6-12 weight% PVA and 3-6 weight % glycerol and the amount of water adjusted to achieve the required dough-like consistency for extrusion.

The Ni-tube was passed through the center of an extrusion die and a 300 micron thick layer of the paste was extruded onto the Ni tube. After drying, the extruded structure with the Ni tube partly embedded in the cermet layer was sintered at 1400°C. A 15 micron thick 10YSZ electrolyte layer was deposited by slurry coating onto the 2-layer structure and sintered at 1400°C.

The 10YSZ slip used for the slurry coating was prepared in the same manner as the NiO/10YSZ paste, using the same proportions of PVA binder and glycerol plasticiser to the weight of powder. However in order to produce a lower viscosity in the slip, compared to the paste, the solids to water ratio was reduced to about 7:3, the exact proportion being adjusted to achieve the required rheology characteristics.

### Example 3:

This example used an organic solvent based system for co-extrusion of a NiO/10YSZ layer and a 10YSZ layer onto a Ni mesh tube.

A tube formed from expanded Ni mesh was pre-oxidised as for Examples 1 and 2. A paste of Ni-10YSZ was prepared as described for Example 1. A paste of 10YSZ was prepared in the same manner as for the 10YSZ slip described in Example 1 except that the solids to solvent ratio was higher at about 9:1 in order to produce a paste of a dough-like consistency. The Ni-tube was passed through the centre of an extrusion die and a 300 micron thick NiO/10YSZ and a 15 micron thick 10YSZ layer were co-extruded onto the Ni tube. The obtained 3-layer structure with the Ni tube partly embedded in the cermet layer was sintered at 1400°C.

### Example 4:

This example used a water based system for co-extrusion of a NiO/10YSZ layer and a 10YSZ layer onto a Ni mesh tube.

A tube formed from expanded Ni mesh was pre-oxidised as for the above Examples. A paste of Ni-10YSZ was prepared as described for Example 2. A paste of 10YSZ was prepared in the same manner as for the 10YSZ slip described in Example 2 except that the solids to water ratio was higher at about 9:1 in order to produce a paste of a dough-like consistency. The Ni-tube was passed through the center of an extrusion die and a 300 micron thick NiO/10YSZ and a 15 micron thick 10YSZ layer were co-extruded onto the Ni tube. The obtained 3-layer structure with the Ni tube partly embedded in the cermet layer was sintered at 1400°C.

While the tubular fuel cells described herein are of circular cross-section, this is not essential and they may be of any suitable cross-section. The terms "tubular" and "tube" as used herein shall be construed accordingly.

Those skilled in the art will appreciate that the invention described herein is susceptible to variations and modifications other than those specifically described. It is to be understood that the invention includes all such variations and modifications which fall within the scope of the invention as defined by the claims.

The reference to any prior art in this specification is not, and should not be taken as, an acknowledgment or any form of suggestion that that prior art forms part of the common general knowledge.

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integers or steps.

## Claims

1. A tubular solid oxide fuel cell assembly (10) comprising an anode side defining a tubular passage (14) for fuel gas, the anode side comprising a ceramic-type anode layer (12) formed by sintering green material and an anode-side current collector (16) in electrical contact with the anode layer, a solid oxide electrolyte layer (18) on a radially outer surface of the anode layer, a cathode layer (20) on a radially outer surface of the electrolyte layer, and a cathode-side current collector (24) on the cathode layer, **characterised in that** the anode-side current collector (16) comprises a preformed tubular metallic structure (16) which is adapted to permit fuel gas in the passage to contact the anode layer, at least the surface of the tubular metallic structure being formed of Ni or Ni alloy, and **in that** the anode layer (12) is formed on the tubular metallic structure (16) such that the tubular metallic structure is at least partly embedded in the anode layer (12) and reinforces the anode layer.

2. An assembly according to claim 1, **characterised in that** the tubular metallic structure (16) is at least substantially completely embedded in the anode layer (12).

3. An assembly according to claim 1 or 2, **characterised in that** the tubular metallic structure (16) has surface formations thereon which project radially outwardly into the anode layer (12).

4. An assembly according to any one of claims 1 to 3, **characterised in that** the tubular metallic structure (16) has concave formations on a radially outer surface thereof into which the anode layer extends.

5. An assembly according to any one of the preceding claims, **characterised in that** the tubular metallic structure (16) extends substantially the full length of the tubular passage (14).

6. An assembly according to any one of the preceding claims, **characterised in that** the tubular metallic structure (16) has a wall thickness in the range of 20 to 200 µm.

7. An assembly according to any one of the preceding claims, **characterised in that** the tubular metallic structure (16) comprises a spiral or mesh of thread.

8. An assembly according to claim 7, **characterised in that** the thread is a nickel thread.

9. An assembly according to any one of the preceding claims, **characterised in that** the tubular metallic structure (16) comprises a support tube which is at least substantially rigid.

10. An assembly according to claim 9, **characterised in that** the support tube is selected from an expanded metal tube, a woven mesh tube and a perforated tube.

11. An assembly according to claim 9 or 10, **characterised in that** the support tube is formed of nickel or nickel alloy.

12. An assembly according to claim 9 or 10, **characterised in that** the support tube comprises a substrate of heat resistant, heat conducting metal and a nickel or nickel alloy surface layer.

13. An assembly according to claim 12, **characterised in that** the substrate is steel.

14. An assembly according to claim 12 or 13, **characterised in that** the surface layer is a foil or is coated on the substrate.

15. An assembly according to any one of the preceding claims, **characterised in that** a thermally conductive tube liner is provided in the passage (14) for conducting heat therefrom.

16. An assembly according to claim 15, **characterised in that** the tube liner is tubular.

17. An assembly according to any one of the preceding claims, **characterised in that** the anode layer (12) is a nickel cermet and has a thickness in the range of 50 to 500 µm.

18. An assembly according to any one of the preceding claims, **characterised in that** the electrolyte layer (18) has a thickness of less than 70µm.

19. An assembly according to any one of the preceding claims, **characterised in that** the cathode layer (20) has a thickness in the range of 30 to 100µm.

20. An assembly according to any one of the preceding claims, **characterised in that** the cathode layer (20) is discontinuous along the length of the assembly (10) to provide a plurality of longitudinally spaced cathode portions

21. An assembly according to claim 20, **characterised in that** each cathode portion has a respective cathode-side current collector.

22. An assembly according to claim 20 or 21, **characterised in that** at least some of the longitudinally spaced cathode portions are electrically connected in series.

23. An assembly according to any one of the preceding claims, **characterised in that** the cathode layer (20) is discontinuous around the assembly (10).

24. An assembly according to claim 22 and claim 23, **characterised in that** the discontinuity around the assembly (10) is provided by at least one longitudinally-extending gap (22) in the cathode layer (20) and **in that** said longitudinally spaced cathode portions are connected in series by a strip (26) of electrically conductive material in said gap.

25. An assembly according to claim 24, **characterised in that** said strip (26) is formed of the same material as the cathode-side current collector (24).

26. An assembly according to any one of the preceding claims, **characterised in that** the cathode-side current collector (24) comprises a metallic layer of noble metal or noble metal alloy which is adapted to permit oxygen containing gas around the assembly to contact the cathode layer.

27. An assembly according to claim 26, **characterised in that** the noble metal is silver.

28. An assembly according to any one of the preceding claims, **characterised in that** the cathode-side current collector (24) comprises at least one mesh deposited on the cathode layer (20).

29. An assembly according to claim 28, **characterised in that** the at least one mesh is a screen-printed mesh.

30. An assembly according to any one of the preceding claims, **characterised in that** the cathode-side current collector (24) has a thickness in the range of 20 to 100µm.

31. A fuel cell bundle (38) comprising a plurality of tubular fuel cell assemblies (10) according to any one of the preceding claims, **characterised in that** each tubular fuel cell assembly is mechanically connected to one or more adjacent tubular fuel cell assemblies.

32. A bundle according to claim 31, **characterised in that** the mechanical connection (27, 28) is continuous along at least part of the length of the tubular fuel cell assemblies (10).

33. A bundle according to claim 31, **characterised in that** the mechanical connection (27, 28) is intermittent along the length of the tubular fuel cell assemblies (10).

34. A bundle according to any one of claims 31 to 33, **characterised in that** the mechanical connection (27) is rigid.

35. A bundle according to any one of claims 31 to 33, **characterised in that** the mechanical connection (28) is flexible.

36. A bundle according to any one of claims 31 to 35, **characterised in that** the mechanical connection also provides an electrical connection between the adjacent tubular fuel cell assemblies (10).

37. A bundle according to claim 36, **characterised in that** the mechanical connection (27, 28) is by connector means formed of the material of the cathode-side current collectors (24).

## Patentansprüche

1. Röhrenförmige Festoxid-Brennstoffzellenbaugruppe (10), die eine einen röhrenförmigen Durchgang (14) für Brennstoffgas definierende Anodenseite umfasst, , wobei die Anodenseite Folgendes umfasst: eine keramikartige Anodenschicht (12), die durch Sintern von grünem Material gebildet wird, und einen anodenseitigen Stromkollektor (16), der in elektrischem Kontakt mit der Anodenschicht steht, eine Festoxidelektrolytschicht (18) auf einer radial äußeren Fläche der Anodenschicht, eine Kathodenschicht (20) auf einer radial äußeren Fläche der Elektrolytschicht, und einen kathodenseitigen Stromkollektor (24) auf der Kathodenschicht, **dadurch gekennzeichnet, dass** der anodenseitige Stromkollektor (16) eine vorgeformte röhrenförmige metallische Struktur (16) umfasst, die dafür ausgelegt ist, dem Brennstoffgas in dem Durchgang zu gestatten, in Kontakt mit der Anodenschicht zu gelangen, wobei mindestens die Oberfläche der röhrenförmigen metallischen Struktur aus Ni oder Ni-Legierung gebildet ist, und dass die Anodenschicht (12) derart auf der röhrenförmigen metallischen Struktur (16) ausgebildet ist, dass die röhrenförmige metallische Struktur mindestens teilweise in die Anodenschicht (12) eingebettet ist und die Anodenschicht verstärkt.

2. Baugruppe nach Anspruch 1, **dadurch gekennzeichnet, dass** die röhrenförmige metallische Struktur (16) mindestens im Wesentlichen vollständig in die Anodenschicht (12) eingebettet ist.

3. Baugruppe nach Anspruch 1 oder 2, **dadurch gekennzeichnet, dass** auf der röhrenförmigen metallischen Struktur (16) Oberflächenausbildungen ausgebildet sind, die radial nach außen in die Anodenschicht (12) hinein hervorstehen.

4. Baugruppe nach einem der Ansprüche 1 bis 3, **dadurch gekennzeichnet, dass** die röhrenförmige metallische Struktur (16) auf ihrer radial äußeren Fläche konkave Ausbildungen aufweist, in die hinein sich die Anodenschicht erstreckt.

5. Baugruppe nach einem der vorangehenden Ansprüche, **dadurch gekennzeichnet, dass** sich die röhrenförmige metallische Struktur (16) im Wesentlichen über die gesamte Länge des röhrenförmigen Durchgangs (14) erstreckt.

6. Baugruppe nach einem der vorangehenden Ansprüche, **dadurch gekennzeichnet, dass** die röhrenförmige metallische Struktur (16) eine Wanddicke im Bereich von 20 bis 200 µm aufweist.

7. Baugruppe nach einem der vorangehenden Ansprüche, **dadurch gekennzeichnet, dass** die röhrenförmige metallische Struktur (16) eine Spirale oder ein Fadengewebe umfasst.

8. Baugruppe nach Anspruch 7, **dadurch gekennzeichnet, dass** der Faden ein Nickelfaden ist.

9. Baugruppe nach einem der vorangehenden Ansprüche, **dadurch gekennzeichnet, dass** die röhrenförmige metallische Struktur (16) eine Stützröhre umfasst, die mindestens im Wesentlichen starr ist.

10. Baugruppe nach Anspruch 9, **dadurch gekennzeichnet, dass** die Stützröhre aus einer aufgeweiteten Metallröhre, einer Geweberöhre und einer perforierten Röhre ausgewählt ist.

11. Baugruppe nach Anspruch 9 oder 10, **dadurch gekennzeichnet, dass** die Stützröhre aus Nickel oder Nickel-Legierung hergestellt ist.

12. Baugruppe nach Anspruch 9 oder 10, **dadurch gekennzeichnet, dass** die Stützröhre ein Substrat aus hitzebeständigem, wärmeleitendem Metall und eine Nickel- oder Nickellegierungs-Oberflächeschicht umfasst.

13. Baugruppe nach Anspruch 12, **dadurch gekennzeichnet, dass** das Substrat Stahl ist.

14. Baugruppe nach Anspruch 12 oder 13, **dadurch gekennzeichnet, dass** die Oberflächenschicht eine Folie ist oder auf das Substrat aufbeschichtet ist.

15. Baugruppe nach einem der vorangehenden Ansprüche, **dadurch gekennzeichnet, dass** eine wärmeleitfähige Röhrenauskleidung in dem Durchgang (14) angeordnet ist, um Wärme von dort abzuleiten.

16. Baugruppe nach Anspruch 15, **dadurch gekennzeichnet, dass** die Röhrenauskleidung röhrenförmig ist.

17. Baugruppe nach einem der vorangehenden Ansprüche, **dadurch gekennzeichnet, dass** die Anodenschicht (12) ein Nickel-Cermet ist und eine Dicke im Bereich von 50 bis 500 µm aufweist.

18. Baugruppe nach einem der vorangehenden Ansprüche, **dadurch gekennzeichnet, dass** die Elektrolytschicht (18) eine Dicke von weniger als 70 µm aufweist.

19. Baugruppe nach einem der vorangehenden Ansprüche, **dadurch gekennzeichnet, dass** die Kathodenschicht (20) einen Dicke im Bereich von 30 bis 100 µm aufweist.

20. Baugruppe nach einem der vorangehenden Ansprüche, **dadurch gekennzeichnet, dass** die Kathodenschicht (20) entlang der Länge der Baugruppe (10) diskontinuierlich ist, um mehrere in Längsrichtung voneinander beabstandete Kathodenabschnitte zu bilden.

21. Baugruppe nach Anspruch 20, **dadurch gekennzeichnet, dass** jeder Kathodenabschnitt einen jeweiligen kathodenseitigen Stromkollektor aufweist.

22. Baugruppe nach Anspruch 20 oder 21, **dadurch gekennzeichnet, dass** mindestens einige der in Längsrichtung voneinander beabstandeten Kathodenabschnitte elektrisch miteinander in Reihe verbunden sind.

23. Baugruppe nach einem der vorangehenden Ansprüche, **dadurch gekennzeichnet, dass** die Kathodenschicht (20) um die Baugruppe (10) herum diskontinuierlich ist.

24. Baugruppe nach Anspruch 22 und Anspruch 23, **dadurch gekennzeichnet, dass** die Diskontinuität um die Baugruppe (10) herum durch mindestens einen in Längsrichtung verlaufenden Spalt (22) in der Kathodenschicht (20) gebildet ist und dass die in Längsrichtung voneinander beabstandeten Kathodenabschnitte durch einen Streifen (26) aus elektrisch leitfähigem Material in dem Spalt miteinander in Reihe verbunden sind.

25. Baugruppe nach Anspruch 24, **dadurch gekennzeichnet, dass** der Streifen (26) aus dem gleichen Material besteht wie der kathodenseitige Stromkollektor (24).

26. Baugruppe nach einem der vorangehenden Ansprüche, **dadurch gekennzeichnet, dass** der kathodenseitige Stromkollektor (24) eine metallische Schicht aus Edelmetall oder Edelmetall-Legierung umfasst, die dafür ausgelegt ist, es zu ermöglichen, dass sauerstoffhaltiges Gas um die Baugruppe herum in Kontakt mit der Kathodenschicht gelangen kann.

27. Baugruppe nach Anspruch 26, **dadurch gekennzeichnet, dass** das Edelmetall Silber ist.

28. Baugruppe nach einem der vorangehenden Ansprüche, **dadurch gekennzeichnet, dass** der kathodenseitige Stromkollektor (24) mindestens ein Maschennetz umfasst, das auf der Kathodenschicht (20) abgelagert ist.

29. Baugruppe nach Anspruch 28, **dadurch gekennzeichnet, dass** das mindestens eine Maschennetz ein siebgedrucktes Maschennetz ist.

30. Baugruppe nach einem der vorangehenden Ansprüche, **dadurch gekennzeichnet, dass** der kathodenseitige Stromkollektor (24) eine Dicke im Bereich von 20 bis 100 µm aufweist.

31. Brennstoffzellenbündel (38), das mehrere röhrenförmige Brennstoffzellenbaugruppen (10) nach einem der vorangehenden Ansprüche umfasst, **dadurch gekennzeichnet, dass** jede röhrenförmige Brennstoffzellenbaugruppe mechanisch mit einer oder mehreren benachbarten röhrenförmigen Brennstoffzellenbaugruppen verbunden ist.

32. Bündel nach Anspruch 31, **dadurch gekennzeichnet, dass** die mechanische Verbindung (27, 28) entlang mindestens eines Teils der Länge der röhrenförmigen Brennstoffzellenbaugruppen (10) kontinuierlich ist.

33. Bündel nach Anspruch 31, **dadurch gekennzeichnet, dass** die mechanische Verbindung (27, 28) entlang der Länge der röhrenförmigen Brennstoffzellenbaugruppen (10) intermittierend ist.

34. Bündel nach einem der Ansprüche 31 bis 33, **dadurch gekennzeichnet, dass** die mechanische Verbindung (27) starr ist.

35. Bündel nach einem der Ansprüche 31 bis 33, **dadurch gekennzeichnet, dass** die mechanische Verbindung (28) flexibel ist.

36. Bündel nach einem der Ansprüche 31 bis 35, **dadurch gekennzeichnet, dass** die mechanische Verbindung auch eine elektrische Verbindung zwischen den benachbarten röhrenförmigen Brennstoffzellenbaugruppen (10) bereitstellt.

37. Bündel nach Anspruch 36, **dadurch gekennzeichnet, dass** die mechanische Verbindung (27, 28) durch Verbindermittel erfolgt, die aus dem Material der kathodenseitigen Stromkollektoren (24) bestehen.

## Revendications

1. Ensemble de pile à combustible à oxyde solide (10) tubulaire comprenant un côté d'anode définissant un passage tubulaire (14) pour un combustible gazeux, le côté d'anode comprenant une couche d'anode (12) de type céramique formée par frittage d'un matériau vert et un collecteur de courant côté anode (16) en contact électrique avec la couche d'anode, une couche d'électrolyte à oxyde solide (18) sur une surface radialement extérieure de la couche d'anode, une couche de cathode (20) sur une surface radialement extérieure de la couche d'électrolyte et un collecteur de courant côté cathode (24) sur la couche de cathode, **caractérisé en ce que** le collecteur de courant côté anode (16) comprend une structure métallique tubulaire (16) préformée qui est adaptée pour permettre au combustible gazeux dans le passage de venir en contact avec la couche d'anode, au moins la surface de la structure métallique tubulaire étant constituée de Ni ou d'un alliage de Ni, et **en ce que** la couche d'anode (12) est formée sur la structure métallique tubulaire (16) de sorte que la structure métallique tubulaire soit au moins partiellement intégrée dans la couche d'anode (12) et renforce la couche d'anode.

2. Ensemble selon la revendication 1, **caractérisé en ce que** la structure métallique tubulaire (16) est au moins sensiblement complètement intégrée dans la couche d'anode (12).

3. Ensemble selon la revendication 1 ou 2, **caractérisé en ce que** la structure métallique tubulaire (16) comporte sur celle-ci des formations de surface qui font saillie radialement vers l'extérieur dans la couche d'anode (12).

4. Ensemble selon l'une quelconque des revendications 1 à 3, **caractérisé en ce que** la structure métallique tubulaire (16) comporte des formations concaves sur une surface radialement extérieure de celle-ci dans lesquelles la couche d'anode s'étend.

5. Ensemble selon l'une quelconque des revendications précédentes, **caractérisé en ce que** la structure métallique tubulaire (16) s'étend sensiblement sur la longueur entière du passage tubulaire (14).

6. Ensemble selon l'une quelconque des revendications précédentes, **caractérisé en ce que** la structure métallique tubulaire (16) a une épaisseur de paroi dans la plage de 20 à 200 µm.

7. Ensemble selon l'une quelconque des revendications précédentes, **caractérisé en ce que** la structure métallique tubulaire (16) comprend une spirale ou un maillage de fil.

8. Ensemble selon la revendication 7, **caractérisé en ce que** le fil est un fil de nickel.

9. Ensemble selon l'une quelconque des revendications précédentes, **caractérisé en ce que** la structure métallique tubulaire (16) comprend un tube de support qui est au moins sensiblement rigide.

10. Ensemble selon la revendication 9, **caractérisé en ce que** le tube de support est sélectionné parmi un tube métallique étiré, un tube de maillage tissé et un tube perforé.

11. Ensemble selon la revendication 9 ou 10, **caractérisé en ce que** le tube de support est constitué de nickel ou d'un alliage de nickel.

12. Ensemble selon la revendication 9 ou 10, **caractérisé en ce que** le tube de support comprend un substrat en un métal thermoconducteur, résistant à la chaleur et une couche superficielle en nickel ou en alliage de nickel.

13. Ensemble selon la revendication 12, **caractérisé en ce que** le substrat est en acier.

14. Ensemble selon la revendication 12 ou 13, **caractérisé en ce que** la couche superficielle est une feuille ou est déposée sur le substrat.

15. Ensemble selon l'une quelconque des revendications précédentes, **caractérisé en ce qu'**une chemise de tube thermiquement conductrice est prévue dans le passage (14) pour conduire la chaleur de celui-ci.

16. Ensemble selon la revendication 15, **caractérisé en ce que** la chemise de tube est tubulaire.

17. Ensemble selon l'une quelconque des revendications précédentes, **caractérisé en ce que** la couche d'anode (12) est un cermet de nickel et a une épaisseur dans la plage de 50 à 500 µm.

18. Ensemble selon l'une quelconque des revendications précédentes, **caractérisé en ce que** la couche d'électrolyte (18) a une épaisseur inférieure à 70 µm.

19. Ensemble selon l'une quelconque des revendications précédentes, **caractérisé en ce que** la couche de cathode (20) a une épaisseur dans la plage de 30 à 100 µm.

20. Ensemble selon l'une quelconque des revendications précédentes, **caractérisé en ce que** la couche de cathode (20) est discontinue le long de la longueur de l'ensemble (10) pour réaliser une pluralité de parties de cathode espacées longitudinalement.

21. Ensemble selon la revendication 20, **caractérisé en ce que** chaque partie de cathode comporte un collecteur de courant côté cathode respectif.

22. Ensemble selon la revendication 20 ou 21, **caractérisé en ce qu'**au moins certaines des parties de cathode espacées longitudinalement sont connectées électriquement en série.

23. Ensemble selon l'une quelconque des revendications précédentes, **caractérisé en ce que** la couche de cathode (20) est discontinue autour de l'ensemble (10).

24. Ensemble selon la revendication 22 et la revendication 23, **caractérisé en ce que** la discontinuité autour de l'ensemble (10) est réalisée par au moins un espace (22) s'étendant longitudinalement dans la couche de cathode (20) et **en ce que** lesdites parties de cathode espacées longitudinalement sont connectées en série par une bande (26) de matériau électriquement conducteur dans ledit espace.

25. Ensemble selon la revendication 24, **caractérisé en ce que** ladite bande (26) est constituée du même matériau que le collecteur de courant côté cathode (24).

26. Ensemble selon l'une quelconque des revendications précédentes, **caractérisé en ce que** le collecteur de courant côté cathode (24) comprend une couche métallique de métal noble ou d'alliage de métaux nobles qui est adaptée pour permettre à un gaz contenant de l'oxygène autour de l'ensemble de venir en contact avec la couche de cathode.

27. Ensemble selon la revendication 26, **caractérisé en ce que** le métal noble est l'argent.

28. Ensemble selon l'une quelconque des revendications précédentes, **caractérisé en ce que** le collecteur de courant côté cathode (24) comprend au moins un maillage déposé sur la couche de cathode (20).

29. Ensemble selon la revendication 28, **caractérisé en ce que** ledit au moins un maillage est un maillage sérigraphié.

30. Ensemble selon l'une quelconque des revendications précédentes, **caractérisé en ce que** le collecteur de courant côté cathode (24) a une épaisseur dans la plage de 20 à 100 µm.

31. Faisceau de piles à combustible (38) comprenant une pluralité d'ensembles de pile à combustible tubulaires (10) selon l'une quelconque des revendications précédentes, **caractérisé en ce que** chaque ensemble de pile à combustible tubulaire est relié mécaniquement à un ou plusieurs ensembles de pile à combustible tubulaires adjacents.

32. Faisceau selon la revendication 31, **caractérisé en ce que** la liaison mécanique (27, 28) est continue le long d'au moins une partie de la longueur des ensembles de pile à combustible tubulaires (10).

33. Faisceau selon la revendication 31, **caractérisé en ce que** la liaison mécanique (27, 28) est intermittente le long de la longueur des ensembles de pile à combustible tubulaires (10).

34. Faisceau selon l'une quelconque des revendications 31 à 33, **caractérisé en ce que** la liaison mécanique (27) est rigide.

35. Faisceau selon l'une quelconque des revendications 31 à 33, **caractérisé en ce que** la liaison mécanique (28) est flexible.

36. Faisceau selon l'une quelconque des revendications 31 à 35, **caractérisé en ce que** la liaison mécanique assure également une connexion électrique entre les ensembles de pile à combustible tubulaires (10) adjacents.

37. Faisceau selon la revendication 36, **caractérisé en ce que** la liaison mécanique (27, 28) est effectuée par des moyens de liaison constitués du matériau des collecteurs de courant côté cathode (24).
